# EUROPÄISCHE PATENTSCHRIFT

(11) **EP 0 668 300 B1**
(45) Veröffentlichungstag und Bekanntmachung des Hinweises auf die Patenterteilung: **10.05.2000**
(21) Anmeldenummer: 95101558.5
(22) Anmeldetag: 06.02.1995
(51) Int. Cl.: C08F 285/00, C09D 151/08

(54) **Polymerdispersion**
Polymer dispersion
Dispersion de polymère

(30) Priorität: 18.02.1994 DE 4405208
(43) Veröffentlichungstag der Anmeldung: 23.08.1995
(73) Patentinhaber: WOLFF WALSRODE AG, 29655 Walsrode (DE)
(72) Erfinder: Lühmann, Erhard, Dipl.-Ing., D-29699 Bomlitz (DE); Hoppe, Lutz, Dr., D-29664 Walsrode (DE); Dannhorn, Wolfgang, Dr., D-29664 Walsrode (DE); Juhl, Hans-Jürgen, Dr., D-29683 Fallingbostel (DE)
(74) Vertreter: Braun, Rolf, Dr.

(56) Entgegenhaltungen:
- WO-A-91/15528

## Beschreibung

Die Erfindung betrifft Polymerdispersionen, die mittels Polyisocyanaten vernetzt werden können, und deren Anwendungen.

In dem Bereich der Beschichtungen und deren Applikationstechniken spielt die ökologische Beurteilung eine wesentliche Rolle, insbesondere die Reduktion der Lösungsmittelemission.

Das Problem der Lösungsmittelemission kann durch Verwendung von wäßrigen Systemen gelöst werden. Wäßrige Systeme können z.B. Poly(meth)acrylatdispersionen sein.

Die Filmbildung bei diesen Dispersionen erfolgt rein physikalisch, allerdings entsprechen die mechanischen und chemischen Beständigkeiten nicht denen der konventionellen, lösungsmittelhaltigen Bindemittelsysteme.

Soll eine chemische Vernetzung der Bindemittel bei Temperaturen von <70°C erfolgen, so können diese Dispersionen allgemein mit Vernetzern auf Basis der Aziridine umgesetzt werden, aber die Stoffklasse gilt als krebserzeugend und scheidet somit für den verantwortungsvollen Verarbeiter aus.

In der EP 03 58 979 werden Kombinationen aus wäßrigen Polyhydroxypolyacrylaten und Polyisocyanaten zur Herstellung von hochwertigen Beschichtungssystemen beschrieben.

Die dort beschriebenen Polyhydroxypolyacrylate werden mittels einer Lösungspolymerisation, z.B. in Butylacetat, hergestellt. Nach der Polymerisation werden die Carboxyl- und Sulfonsäuregruppen mit Alkalien neutralisiert und mit Wasser verdünnt. Nach der sehr aufwendigen Lösungsmitteldestillation werden je nach Aufbau des Polymerisates wäßrige Lösungen bzw. Dispersionen erhalten.

Liegt das Bindemittelsystem als wäßrige Lösung vor, so ist die Eigenviskosität relativ hoch und die Einstellung von festkörperreichen Bindemittelsystemen deswegen nur sehr begrenzt möglich.

Vorteilhaft ist jedoch, daß die OH-Gruppen, die im Polymer statistisch verteilt sind, relativ gut für die Isocyanat-Gruppen und somit für die Vernetzung zuganglich sind. Nachteilig ist aber, daß nach der Isocyanat-Zugabe in relativ kurzer Zeit eine deutliche Viskositätszunahme festzustellen ist, und die Einstellung der Applikationsparameter schwierig wird.

Liegt das Bindemittelsystem als Dispersion vor, so reduziert sich die Eigenviskosität des Lacksystems erheblich, und es sind festkörperreiche Lacksysteme einstellbar. Da aber die OH-Gruppen gleichmäßig in den Polymerteilchen verteilt sind und die nachträgliche Isocyanatvernetzung hauptsächlich an der Dispersionsteilchengrenzschicht mit den OH-Gruppen stattfindet, ist eine vollständige OH-Vernetzung in den Dispersionsteilchen kaum zu erreichen.

Dieses Vernetzungsdefizit setzt die mechanischen und chemischen Beständigkeiten auf ein niedriges, nicht akzeptables Niveau herab.

In der DE-OS 39 02 555 werden Acrylatdispersionen beschrieben, die nach dem Kern-Schale-Modell (mehrphasig) aufgebaut sind.

Nur das Polymerisat im Kern ist durch mehrfunktionelle acrylestergruppenhaltige Monomere vernetzt. Die innere Vernetzung reicht nicht aus, um hochwertige chemische und mechanische Beständigkeiten zu erreichen. So sind z.B. die Beschichtungen gegenüber Methylethylketon (MEK) nicht beständig.

Eine nachträgliche Vernetzung mit Isocyanat wird nicht beschrieben.

Wird zum Aufbau der mehrphasigen Struktur als letzte Monomerkomponente reines Hydroxy(meth)acrylat in der Menge zudosiert, daß der notwendige OH-Gehalt, bezogen auf das Gesamtpolymer, >0,5 Gew.-% ist, so entsteht bereits während der Polymerisation ein erheblicher Granulatanteil, bzw. der Ansatz koaguliert bei der Polymerisation.

Daher können allgemein nur solche Polymerschalen aufgebaut werden, die nur anteilig Hydroxy(meth)acrylat enthalten, obwohl eine reine Hydroxy(meth)-acrylatschale erstrebenswert ist.

Überraschend wurde gefunden, daß reine Hydroxy(meth)-acrylatschalen herstellbar sind, wenn die wäßrigen Polymerisationsvorlage einen neutralisierten wasserlöslichen Urethan-Allyletherpolyester enthält.

Gegenstand der Erfindung ist eine 10 - 70 %ige (Gew.-) Polymerdispersion aus einer wäßrigen kontinuierlichen Phase und dispergierten Teilchen, die aus einem polymerisierten Wasserlöslichen, urethanmodifizierten Allyletherpolyester und polymerisierten Monomeren bestehen, dadurch gekennzeichnet, daß wenigstens zwei polymerisierte Monomere A (Kern) und B (Schale) zusammen mit einem wasserlöslichen urethanmodifizierten Allyletherpolyester das Dispersionsteilchen darstellen und nach dem Kern-Schale-Modell (mehrphasig) aufgebaut sind mit einem mittleren Teilchendurchmesser von 0,01 bis 2 µm und die aufgebaut ist aus
2 - 10 Gew.-% wasserlösliche, neutralisierte, urethanmodifizierte Allyletherpolyester
70 - 90 Gew.-% Monomer A, wobei
A ein oder mehrere Monomere der Formel 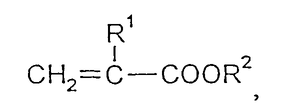 welches den Kern mit einer polymerisierbaren, eine Doppelbindung enthaltenden Verbindung aufbaut, worin bedeuten:
R¹ Wasserstoff oder eine Alkylgruppe mit 1 bis 4 C-Atomen,
R² Wasserstoff, ein Alkylrest mit 1 bis 20 C-Atomen, ein Cycloalkylrest mit 5 oder 6 Kohlenstoffatomen, ein Rest der allgemeinen Formel -(CHR³-CHR⁴-O)ₙ-R⁵, ein Arylrestrest mit 6-8 C-Atomen, wobei diese Reste gegebenenfalls weiter substituiert sein können,
R³, R⁴, R⁵ Wasserstoff, Alkyl mit 1-6 C-Atomen,
n eine ganze Zahl von 1 bis 50,
5 - 20 Gew.-% Monomer B, wobei
B ein Monomer der allgemeinen Formel ist: 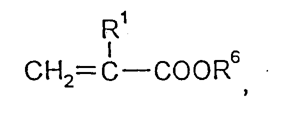 welches die Schale aufbaut, worin bedeuten:
R⁶ eine Alkylgruppe mit 2 - 6 C-Atomen, die mindestens eine OH-Gruppe enthält sowie
0,2 - 10 Gew.-% Emulgator C.

Die Teilchen haben einen Durchmesser kleiner als 10 µm.

Als wasserlösliche urethanmodifizierte Allyletherpolyester eignen sich besonders neutralisierte Polyester, wie sie z.B. in der DOS 4 011 349, bzw. in Kombination von DOS 4 011 349 und DE-A 4 219 768 beschrieben sind.

Der polymerisierte wasserlösliche urethanmodifizierte Allyletherpolyester sowie die polymerisierten Monomeren A und B befinden sich in den Polymerteilchen nicht gleichmäßig verteilt. Die polymerisierten Monomeren B sind hauptsächlich - homogen verteilt - in der äußeren Hülle (Schale) um den Dispersionskern.

In der erfindungsgemäßen Ausführungsform beträgt das Verhältnis von polymerisierten Monomeren A des Kernes zu polymerisierten Monomeren B der äußeren Hülle (Schale) 80:20 bis 95:5. Der Kern der Polymerteilchen kann auch mehrere Hüllen unterschiedlicher Zusammensetzung aufweisen.

Die erfindungsgemäßen Dispersionsteilchen enthalten
2 - 10 Gew.-% polymerisierte wasserlösliche urethanmodifizierte Allyletherpolyester,
70 - 90 Gew.-% des polymerisierten Monomeren A,
5 - 20 Gew.-% des polymerisierten Monomeren B,
0,2 - 10 Gew.-% Emulgator C.

Gegenstand der Erfindung ist weiterhin die Verwendung der erfindungsgemäßen Dispersion unter gegebenenfalls Zufügen von üblichen Lackinhaltsstoffen, insbesondere von Gleitmitteln, Glanzverbesserungsmitteln, Verlaufsmitteln, Pigmenten, Füllstoffen, Harzen, Weichmachern, gegebenenfalls Lösungsmitteln und Polyisocyanaten zur Vernetzung.

Die polymerisierbaren Monomeren A können zu einem Teil, vorzugsweise bis zu 70 Gew.-%, besonders bevorzugt zu 5 bis 50 Gew.-% durch wenigstens eines der folgenden polymerisierbaren Monomeren ersetzt werden:
1. Styrol und/oder substituierte Styrole der nachstehenden Formel: 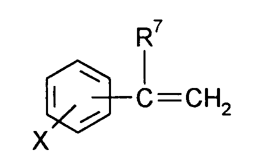 wobei R⁷ ein H oder -CH₃ und X ein Wasserstoff- oder Halogenatom (z.B. ein Chlor- oder Bromatom) oder eine Methylgruppe bedeutet.
2. Vinylester wie Vinylacetat, Vinylpropionat und/oder -butyrat, bevorzugt wird Vinylacetat.
3. Vinylchlorid und/oder Vinylidenchlorid.
4. Außerdem können Acrylnitril, Methacrylnitril oder Acrylamid zugegeben werden.
5. Umsetzungsprodukte aus Hydroxyethylacrylat, Hydroxypropylacrylat, Hydroxypropylmethacrylat oder Hydroxyethylmethacrylat mit Mono-Isocyanaten oder Epoxiden.
6. Allylethergruppenhaltige Verbindungen mit nur einer polymerisierbaren Doppelbindung.
   Die polymerisierbaren Monomeren A können außerdem teilweise, vorzugsweise bis zu 10 Gew.-% durch polyfunktionelle Verbindungen ersetzt werden:
   Es handelt sich dabei um Monomere oder Prepolymere, die mehr als eine polymerisierbare Doppelbindung pro Molekül Monomer oder Prepolymer enthalten, wie z.B. Epoxypolyacrylate, Polyesterpolyacrylate oder Polyurethanpolyacrylate oder den entsprechenden Methacrylaten oder Allyletherverbindungen.
   Geeignete Emulgatoren für wäßrige Medien bei der Herstellung der erfindungsgemäßen Dispersion sind in
   "Emulsions: Theory and Practice", Paul Becker, Kapitel 6, Reinhold Publishing Corp., New York (1965) und
   in Mc Cutcheon's "Detergents and Emulsifiers, 1972 Annual",
   "Tenside, Textilhilfsmittel, Waschrohstoffe", Dr. K. Lindner, Wissenschaftliche Verlagsgesellschaft, Stuttgart, 1964
beschrieben. Beispiele sind anionaktive Substanzen, wie Carboxylate, z.B. Fettsäureseifen (abgeleitet von Laurin-, Stearin- oder Ölsäure) und Acylderivate von Sarcosin (Methylglycin), Sulfate, z.B. Natriumlaurylsulfat, sulfatierte natürliche Öle und Ester (Türkisch-Rot-Öl) und Alkylarylpolyethersulfate und -sulfonate, z.B. Alkylarylpolyethersulfonate, Dodecylbenzolsulfonat, Isopropylnaphthalinsulfonate und Sulfosuccinate sowie Sulfosuccinate, Phosphorsäureester, z.B. langkettige Fettalkoholteilester komplexer Phosphate und Orthophosphorsäureester von polyethoxylierten Fettalkoholen.

Außerdem können Carboxylate, Sulfate, Sulfonate, Phosphate, Phosphite oder Phosphonate von nichtionogenen oberflächenaktiven Alkyl-, Aryl, Alkylglykolethern, acrylierten bzw. alkylierten Alkanolaminpolyglykolethern oder Copolymerisaten aus Ethylenoxid und/oder Polypropylenoxid verwendet werden.

Die vorgenannten anionaktiven Substanzen können in Form der Natrium-, Kalium-, Lithium-, Ammonium- oder Aminsalze vorliegen; am gebräuchlichsten sind die Natrium- und Ammoniumsalze.

Ein Beispiel für eine amphotere Substanz ist Laurylammoniumsulfonsäurebetain.

Beispiele für nichtionogene Substanzen sind ethoxylierte ein- und mehrwertige Alkohole (d.h. die Ethylenoxidderivate dieser Alkohole), wie z.B. Octyl-und Nonylphenolderivate, Ethylenoxid/Propylenoxid-Blockcopolymere, Ester (z.B. Glycerylmonostearat), ethoxylierte Öle, wie z.B. Ethoxylierungsprodukte von Sorbit (z.B. Sorbitanmonostearat, Polyethylenoxidsorbitanmonolaurat) sowie Laurinsäureisopropanolamid.

Am häufigsten verwendet werden anionaktive und/oder nichtionogene Substanzen.

Ebenfalls einsetzbar (entweder allein oder in Kombination mit den vorstehend beschriebenen oberflächenaktiven Substanzen) sind Kolloide und hochmolekulare Stabilisatoren, wie komplexe Polysaccharide (Gummi Arabicum und Traganth), Amylopectin, wasserlösliche Cellulosederivate (z.B. Natriumcarboxymethylcellulose, Hydroxyethyl- und Hydroxypropylcellulose), Polyvinylalkohol (z.B. in teilweise verseifter Form), Polyvinylpyrrolidon (z.B. alkyliertes Polyvinylpyrrolidon), Alginate und Carageenan.

Mit der Wahl der richtigen oberflächenaktiven Mittel und Stabilisatoren befaßt sich ein umfangreicheres Schrifttum einschließlich der vorgenannten Literaturstellen. Häufig ist man auf das Experiment angewiesen. Die Zugabemengen liegen im Bereich von 0,2 bis 10 Gew.-%.

Verfahren zur Herstellung der wäßrigen Emulsionen sind allgemein bekannt und werden z.B. beschrieben in:
- Journal of Polymer Science, Vol. 22, S. 1365-1372
- H. Rauch Puntigam, th. Völker
   Acryl- und Methacrylverbindungen
   Springer Verlag - Heidelberg 1967
- Ullmann's Encyklopädie der Technischen Chemie, Bd. 19, Verlag Chemie.

Die Stufenpolymerisation zum Erreichen des erfindungsgemäßen mehrphasigen (Kern/Schale) Aufbaus der Polymerteilchen erfolgt unter der Vorlage einer wäßrigen Lösung des Urethan-modifizierten Allyletherpolyesters und dem bekanntermaßen nacheinander Zudosieren von verschiedenen Monomerzusammensetzungen in denselben Polymerisationsansatz, der nach bekanntem Emulsionspolymerisationsprinzip polymerisiert wird.

Erfindungsgemäß erfolgt als letzte Monomerzugabe das Zudosieren des OH-haltigen Monomers B.

Die Zugabe der einzelnen Monomerzusammensetzungen erfolgt nach dem Zulaufverfahren (wie z.B. von Monomerlösungen und/oder Monomeremulsionen).

Die Polymerisationsreaktion erfordert einen radikalbildenden Initiator, der auf einmal, portionsweise oder kontinuierlich, zugegeben wird. Die Zugabe kann in Substanz oder in wäßriger oder in organischer Lösung erfolgen. Es können einzelne oder Gemische von Initiatoren, die bevorzugt unterschiedliche Zerfallsgeschwindigkeiten aufweisen, verwendet werden.

Als Initiatoren eignen sich wasserlösliche- und öllösliche radikalbildende Verbindungen. Beispiele für geeignete wasserlösliche Verbindungen sind Natrium-, Kalium- und Ammoniumpersulfat, tert.-Butylhydroperoxid und Wasserstoffperoxid.

Diese können für sich oder zusammen mit Reduktionsmitteln, wie z.B. Eisen-II-sulfat, Natriumsulfit, Natriumhydrogensulfit, Natriumthiosulfat oder Ascorbinsäure, verwendet werden.

Beispiele für einsetzbare öllösliche Verbindungen sind Peroxide und Hydroperoxide, wie z.B. Benzoylperoxid, Laurylperoxid und Clyclohexanonhydroperoxid, Percarbonate und Azoverbindungen.

Die Molmassen der Polymeren können in der üblichen Weise durch Zusatz von Kettenüberträgern und Reglern begrenzt werden.

Allgemein erfolgt eine anschließende Neutralisation der Polymerdispersion mit Basen, wie z.B. Natronlauge, Ammoniak, Triethanolamin oder Methyldiethanolamin.

Die Viskosität der wäßrigen Polymerdispersion liegt vorzugsweise im Bereich 2 bis 1.000 mPa·s. Der mittlere Teilchendurchmesser liegt im Bereich von 0,01 bis 2 µm und ist in der Regel monomodal.

Der Feststoffanteil der Polymerdispersion liegt im Bereich von 10 bis 70 Gew.-%, vorzugsweise im Bereich von 20 bis 60 Gew.-%.

Je nach Anwendungsgebiet (z.B. Holz-, Metall-, Kunststoff-, Papier-, Leder-, Glas-, Folien- und mineralischen Baustofflackierung) werden diesen erfindungsgemäßen Polymerdispersionen Polyisocyanate mit freien Isocyanaten in emulgierter Form hinzugegeben, wobei ein NCO/OH-Äquivalentverhältnis von 0,5:1 bis 3:1 eingestellt wird.

Bei Polyisocyanatkomponenten handelt es sich, wie z.B. in der EP 0358979 beschrieben, um organische Polyisocyanate.

Falls erforderlich, können der Polymerdispersion und/oder der Polyisocyanatkomponente Lösungsmittel zur Einstellung der gewünschten Mindestfilmtemperatur in einer Menge von max. 15 Gew.-% hinzugefügt werden.

Es können auch solche Stoffe hinzugesetzt werden, die die Verarbeitung oder anwendungstechnischen Eigenschaften verbessern, wie z.B. Gleitmittel, Glanzverbesserungsmittel, Verlaufmittel, Pigmente, Farbstoffe, Mattierungsmittel und Füllstoffe.

Weiterhin können die erfindungsgemäßen Dispersionen auch mit weiteren Harzen, wie z.B. Alkydharzen und Melaminharzen oder weiteren Polymerdispersionen kombiniert werden. Auch weitere OH-haltige Polymere, wie wasserlösliche OH-haltige Polyester, können mit der Polymerdispersion kombiniert werden.

### Beispiele

### Urethan-Allyletherpolyester A

Es wurde das Beispiel Nr. 3 aus der Anmeldung DE-A 4 219 768 nachgearbeitet und für die erfindungsgemäßen Versuche eingesetzt mit folgenden Ausgangssubstanzen:

| | |
|---|---|
| Polyethylenglykol 1500 | 0,03 Mol |
| Propan-1,2-diol | 0,55 Mol |
| Benzylalkohol | 0,40 Mol |
| Trimethylolpropan | 0,04 Mol |
| Trimethylolpropandiallylether | 0,60 Mol |
| Maleinsäureanhyderid | 1,00 Mol |
| Säurezähl (mg KOH/g) des Allyletherpolyesters: | 21 mg/g |

Dieser Polyester wurde mit 0,35 Gew.-% Hexamethylendiisocyanat bei 70°C versetzt. Nach 2 Stunden wurde abgekühlt, und es konnten keine freien NCO-Gruppen bestimmt werden.

Dieser Urethan-Allyletherpolyester wurde in Wasser mittels Dissolver (Festkörpergehalt 50 Gew.-%) und mit 12,5 %igem Ammoniak auf einen pH-Wert von 7,2 eingestellt. Durch diese Neutralisation entstand eine leicht trübe viskose Lösung.

### Beispiel 1

In einem 1-l-Reaktionsgefäß, ausgerüstet mit Rückflußkühler, 2 Zulaufstutzen und einem Rührwerk werden 26 g des Na-Salzes des Alkylphenolethersulfats, 481 g Wasser und 40 g des neutralisierten Urethan-Allyletherpolyester A vorgelegt und auf 72°C aufgeheizt.

Es wurden folgende Mischungen vorbereitet:

### Zulauf 1a

- 3 g: Methacrylsäure
- 101 g: Butylacrylat
- 101 g: Styrol

### Zulauf 1b

- 86 g: Methylmethacrylat
- 18 g: Butylacrylat

### Zulauf 1c

- 30 g: Hydroxypropylacrylat
- 13 g: Alkylphenolethersulfat Na-Salz
- 30 g: Wasser

### Zulauf 2

- 1,3 g: Kaliumpersulfat
- 60 g: Wasser

In die 72°C warme Reaktionsvorlage wurden von den Zuläufen 1a und 2 innerhalb von 5 min 8 % der Menge hinzudosiert und 15 min bei dieser Temperatur gehalten.

Nach dieser Reaktionszeit wurde der restliche Zulauf 1a innerhalb von 90 min und der restliche Zulauf 2 innerhalb von 400 min zudosiert. Nach Beendigung des Zulaufs 1a wurde auf 95°C aufgeheizt und der Zulauf 1b innerhalb von 40 min gleichmäßig zugegeben. Nach dem Zulaufende 1b wurde 60 min bei 85°C weiter gerührt und anschießend der Zulauf 1c innerhalb von 120 min hinzugefügt. Nach Beendigung des Zulaufs 2 wurde auf 25°C abgekühlt und mit Ammoniak auf einen pH-Wert von 6,8 eingestellt.

Die Dispersion war granulatfrei und zeigte einen mittleren Teilchendurchmesser von 0,3 µm.

### Beispiel 2

Es wurde das Beispiel 1 ohne Einsatz des neutralisierten Urethan-Allyletherpolyesters A wiederholt.

Bereits beim Zudosieren des Zulaufes 1c entstand im Reaktionsgefäß ein erheblicher grober Granulatanteil, so daß das Endprodukt für die Applikationsversuche nicht mehr einsatzfähig war.

### Beispiel 3

In das im Beispiel 1 beschriebene Reaktionsgefäß wurden 17 g des Na-Salzes des Alkylphenolethersulfats, 496 g Wasser und 26 g des neutralisierten Urethan-Allyletherpolyesters A vorgelegt und auf 75°C aufgeheizt.

Es wurden folgende Mischungen vorbereitet:

### Zulauf 1a

- 3 g: Methacrylsäure
- 78 g: Butylacrylat
- 66 g: Styrol
- 57 g: Methylmethacrylat

### Zulauf 1b

- 39 g: Hydroxypropylacrylat
- 17 g: Alkylphenolethersulfat Na-Salz
- 60 g: Wasser

### Zulauf 2

- 0,9 g: Kaliumpersulfat
- 40 g: Wasser

In die 75°C warme Reaktionsvorlage wurden vom Zulauf 1a 6 % und vom Zulauf 2 jeweils 8 % der Menge innerhalb von 5 min zudosiert und 15 min bei dieser Temperatur gehalten.

Nach dieser Reaktionszeit wurde der restliche Zulauf 1a innerhalb von 150 min und der restliche Zulauf 2 innerhalb von 380 min zudosiert.

Nach dem Zulaufende von 1a wurde nach 15 min der Zulauf 1b innerhalb von 150 min zudosiert.

Nach Beendigung des Zulaufes 2 wurde auf 25°C abgekühlt und mit Ammoniak auf einen pH-Wert von 6,5 eingestellt.

Die Dispersion war granulatfrei und zeigte einen mittleren Teilchendurchmesser von 0,3 µm.

### Beispiel 4

Es wurde das Beispiel 3 ohne den neutralisierten Urethan-Allyletherpolyester A wiederholt.

Beim Zudosieren des Zulaufes 1b entstand ein Gel.

### Beispiel 5

Um die besondere Wirkung des neutralisierten Urethan-Allyletherpolyesters zu zeigen, wurde Beispiel 1 ohne Zulauf 1c wiederholt (Versuch 5a).

Außerdem wurde der Versuch 5a ohne diesen neutralisierten Urethan-Allyletherpolyester A wiederholt (Versuch 5b).

Beide Versuche waren granulatfrei und zeigten eine Mindestfilmtemperatur von 43°C.

Jedoch wurden folgende Unterschiede festgestellt:

| | Versuch 5a | Versuch 5b |
|---|---|---|
| Pendelhärte nach König 90 µm Naßfilm, getrocknet bei 15 min 80°C | 135 sec | 94 sec |
| Schleifbarkeit | Schleifpapier nicht zugesetzt | Schleifpapier zugesetzt |

Diese beiden Versuche zeigen deutlich, daß der Einbau von dem neutralisierten Urethan-Allyletherpolyester A auch bereits bei physikalisch trocknenden Systemen eine wünschenswerte Eigenschaftsverbesserung bringt.

### Beispiel 6

100 g der Dispersion aus dem Beispiel 1 wurden mit 5 g eines polyfunktionellen Isocyanates, Basis Hexamethylendiisocyanat - ca. 17 % NCO Gehalt, versetzt und mittels Korbrührer homogenisiert.

Nach 30 min wurde dieser 2-K-Lack auf eine Holzplatte mittels Kastenrakel (90 µm Naßfilm) augezogen. Dieser Lackfilm wurde bei 65°C 10 min getrocknet und dann mit Schleifpapier geschliffen.

Anschließend wurde der Lackauftrag nochmals wiederholt. Nach einer Lagerung von 24 Stunden wurde die Chemikalienbeständigkeit überprüft (gemäß DIN 68 861, Teil 1):

| | | |
|---|---|---|
| 50 %iges Ethanol | 1 h | ohne Befund |
| Wasser | 16 h | ohne Befund |
| Benzin | 2 h | ohne Befund |
| Aceton | 10 s | geringes Anquellen |
| Ethyl/Butylacetat (1:1) | 10 s | ohne Befund |

Nach einer Lagerung von 48 Stunden zeigte die Oberfläche, die mit MEK 10 x abgewischt wurde, keine Veränderung.

## Patentansprüche

1. 10 - 70 %ige (Gew.-) Polymerdispersion aus einer wäßrigen kontinuierlichen Phase und dispergierten Teilchen, die aus einem polymerisierten wasserlöslichen, urethanmodifizierten Allyletherpolyester und polymerisierten Monomeren bestehen, dadurch gekennzeichnet, daß wenigstens zwei polymerisierte Monomere A (Kern) und B (Schale) zusammen mit einem wasserlöslichen urethanmodifizierten Allyletherpolyester das Dispersionsteilchen darstellen und nach dem Kern-Schale-Modell (mehrphasig) aufgebaut sind mit einem mittleren Teilchendurchmesser von 0,01 bis 2 µm und die aufgebaut ist aus
2 - 10 Gew.-% wasserlösliche, neutralisierte, urethanmodifizierte Allyletherpolyester
70 - 90 Gew.-% Monomer A, wobei
A ein oder mehrere Monomere der Formel 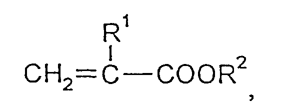 welches den Kern mit einer polymerisierbaren, eine Doppelbindung enthaltenden Verbindung aufbaut, worin bedeuten:
R¹ Wasserstoff oder eine Alkylgruppe mit 1 bis 4 C-Atomen,
R² Wasserstoff, ein Alkylrest mit 1 bis 20 C-Atomen, ein Cycloalkylrest mit 5 oder 6 Kohlenstoffatomen, ein Rest der allgemeinen Formel -(CHR³-CHR⁴-O)ₙ-R⁵, ein Arylrestrest mit 6-8 C-Atomen, wobei diese Reste gegebenenfalls weiter substituiert sein können,
R³, R⁴, R⁵ Wasserstoff, Alkyl mit 1-6 C-Atomen,
n eine ganze Zahl von 1 bis 50,
5 - 20 Gew.-% Monomer B, wobei
B ein Monomer der allgemeinen Formel ist: 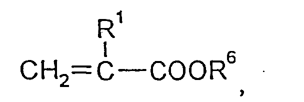 welches die Schale aufbaut, worin bedeuten:
R⁶ eine Alkylgruppe mit 2 - 6 C-Atomen, die mindestens eine OH-Gruppe enthält sowie
0,2 - 10 Gew.-% Emulgator C.

2. Polymerdispersion gemäß Anspruch 1, dadurch gekennzeichnet, daß das Monomer A (Kern) bis zu 70 Gew.-% durch andere, von A verschiedene polymerisierbare Monomere, ersetzt werden kann, ausgewählt aus der Gruppe
1. Styrol und/oder substituierte Styrole der nachstehenden Formel: 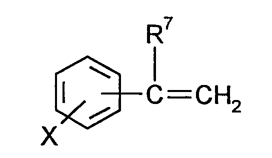 wobei R⁷ ein H oder -CH₃ und X ein Wasserstoff- oder Halogenatom (z.B. ein Chlor- oder Bromatom) oder eine Methylgruppe bedeutet,
2. Vinylester wie Vinylacetat, Vinylpropionat und/oder -butyrat, bevorzugt wird Vinylacetat,
3. Vinylchlorid und/oder Vinylidenchlorid,
4. Außerdem können Acrylnitril, Methacrylnitril oder Acrylamid zugegeben werden,
5. Umsetzungsprodukte aus Hydroxyethylacrylat, Hydroxypropylacrylat, Hydroxypropylmethacrylat oder Hydroxyethylmethacrylat mit Mono-Isocyanaten oder Epoxiden,
6. Allylethergruppenhaltige Verbindungen mit nur einer polymerisierbaren Doppelbindung, wobei die
polymerisierbaren Monomeren A bis zu 10 Gew.-% durch polyfunktionelle Verbindungen wie
Monomeren oder Prepolymeren, die mehr als eine polymerisierbare Doppelbindung pro Molekül Monomer oder Prepolymer enthalten, wie Epoxypolyacrylate, Polyesterpolyacrylate oder Polyurethanpolyacrylate oder den entsprechenden Methacrylaten oder Allyletherverbindungen ersetzt sein können.

3. Verwendung der Polymerdispersionen gemäß Anspruch 1 oder 2 zur Herstellung von Lacken.

## Claims

1. A 10 - 70 % (by weight) polymer dispersion comprising an aqueous continuous phase and dispersed particles, which consist of a polymerised, water-soluble, urethane-modified allyl ether polyester and polymerised monomers, characterized in that at least two polymerised monomers A (core) and B (shell) together with a water-soluble urethane-modified allyl ether polyester constitute the dispersion particle and are produced according to the core-shell model (multiphase) with an average particle diameter of 0.01 to 2 µm, which is synthesised from
2 - 10 % by weight of water-soluble, neutralized, urethane-modified allyl ether polyesters,
70 - 90% by weight of monomer A, wherein
A is one or more monomers of formula 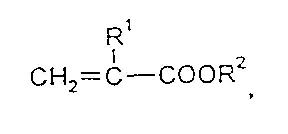 which produces the core with a polymerisable compound containing a double bond, wherein:
R¹ denotes hydrogen or an alkyl group comprising 1 to 4 C atoms,
R² denotes hydrogen or an alkyl group comprising 1 to 20 C atoms, a cycloalkyl radical comprising 5 or 6 carbon atoms, a radical of general formula -(CHR³-CHR⁴-O)ₙ-R⁵, or an aryl radical comprising 6-8 C atoms, wherein these radicals may optionally be further substituted,
R³, R⁴, R⁵ denote hydrogen, or an alkyl comprising 1-6 C atoms, and
n is an integer from 1 to 50,
5 - 20 % by weight of monomer B, wherein
B is a monomer of general formula: 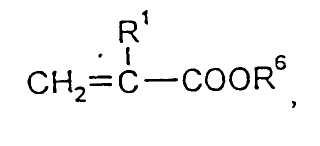 which produces the shell, wherein:
R⁶ denotes an alkyl group which comprises 2 - 6 C atoms and which contains at least one OH group, as well as
0.2 - 10 % by weight of emulsifier C.

2. A polymer dispersion according to claim 1, characterized in that up to 70 % by weight of monomer A (core) can be replaced by other polymerisable monomers which are different from A, and which are selected from the group comprising
1. styrene and/or substituted styrenes of the following formula: 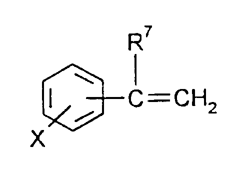 wherein R⁷ denotes an H or -CH₃ and X denotes a hydrogen or halogen atom (e.g. a chlorine or bromine atom) or a methyl group;
2. vinyl esters such as vinyl acetate, vinyl propionate and/or butyrate, preferably vinyl acetate:
3. vinyl chloride and/or vinylidene chloride.
4. acrylonitrile, methacrylonitrile or acrylamide can be added in addition,
5. the reaction products of hydroxyethyl acrylate, hydroxypropyl acrylate, hydroxypropyl methacrylate or hydroxyethyl methacrylate with monoisocyanates or epoxides.
6. compounds which contain allyl ether groups and which comprise only one polymerisable double bond, wherein
up to 10 % by weight of the polymerisable monomers can be replaced by polyfunctional compounds such as
monomers or prepolymers which contain more than one polymerisable double bond per molecule of monomer or prepolymer, such as epoxy polyacrylates, polyester polyacrylates or polyurethane polyacrylates or the corresponding methacrylates, or ally ether compounds.

3. The use of the polymer dispersions according to claims 1 or 2 for the production of lacquers.

## Revendications

1. Dispersion de polymère à 10-70 % en masse composée d'une phase aqueuse continue et de particules dispersées constituées d'un polyester-éther allylique modifié par des groupes uréthane, soluble dans l'eau et polymérisé, et de monomères polymérisés, caractérisée en ce qu'au moins deux monomères polymérisés A (noyau) et B (coque) représentent ensemble, avec un polyester-éther allylique modifié par des groupes uréthane et soluble dans l'eau, les particules de la dispersion et ont une structure correspondant au modèle du noyau et de la coque (à plusieurs phases) avec un diamètre moyen de particules de 0,01 à 2 µm, et qui est constituée par
2-10 % en masse de polyesters-éthers allyliques modifiés par des groupes uréthane, neutralisés et solubles dans l'eau,
70-90 % en masse de monomère A,
A étant un ou plusieurs monomères de formule 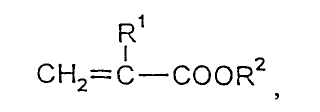 qui constituent le noyau avec un composé polymérisable contenant une double liaison, et dans lesquels
R¹ représente un atome d'hydrogène ou un groupe alkyle de 1 à 4 atomes de carbone,
R² représente un atome d'hydrogène, un reste alkyle de 1 à 20 atomes de carbone, un reste cycloalkyle de 5 ou 6 atomes de carbone, un reste de formule générale -(CHR³-CHR⁴-O)ₙ-R⁵, un reste aryle de 6 à 8 atomes de carbone, ces restes pouvant éventuellement avoir d'autres substituants,
R³, R⁴, R⁵ représentent un atome d'hydrogène ou un reste alkyle de 1 à 6 atomes de carbone,
n est un nombre entier de 1 à 50,
5-20 % de monomère B,
B étant un monomère de formule générale 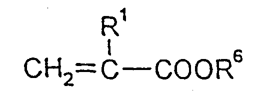 qui constitue la coque, et dans lequel
R⁶ représente un groupe alkyle de 2 à 6 atomes de carbone contenant au moins un groupe OH, et
0,2 à 10 % en masse d'un émulsionnant C.

2. Dispersion de polymère selon la revendication 1 caractérisée en ce que le monomère A (noyau) peut être remplacé jusqu'à 70 % en masse par d'autres monomères polymérisables différents de A, choisis dans le groupe constitué par
1. le styrène et/ou des styrènes substitués ayant la formule suivante : 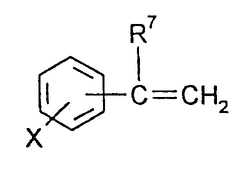 dans laquelle R⁷ est H ou -CH₃ et X représente un atome d'hydrogène ou d'halogène (par exemple un atome de chlore ou de brome) ou un groupe méthyle,
2. des esters vinyliques comme l'acétate de vinyle, le propionate de vinyle et/ou le butyrate de vinyle, de préférence l'acétate de vinyle,
3. le chlorure de vinyle et/ou le chlorure de vinylidène,
4. on peut en outre ajouter de l'acrylonitrile, du méthacrylonitrile ou de l'acrylamide,
5. des produits de réaction d'acrylate d'hydroxyéthyle, d'acrylate d'hydroxypropyle, de méthacrylate d'hydroxypropyle ou de méthacrylate d'hydroxyéthyle avec des mono-isocyanates ou des époxydes,
6. des composés contenant des groupes éther allylique ayant une seule double liaison polymérisable,
les monomères polymérisables A pouvant être remplacés jusqu'à 10 % en masse par des composés polyfonctionnels comme des monomères ou des prépolymères contenant plus d'une double liaison polymérisable par molécule de monomère ou de prépolymère, comme des époxypolyacrylates, des polyesterpolyacrylates ou des polyuréthanepolyacrylates, ou les méthacrylates correspondants ou des composés d'éther allylique.

3. Utilisation des dispersions de polymères selon la revendication 1 ou 2 pour la préparation de vernis.
